Europäisches Patentamt

European Patent Office

Office européen des brevets

(11) Veröffentlichungsnummer: **0 281 746 B1**

(12) **EUROPÄISCHE PATENTSCHRIFT**

(45) Veröffentlichungstag der Patentschrift: **30.09.92**

(21) Anmeldenummer: **88101109.2**

(22) Anmeldetag: **26.01.88**

(51) Int. Cl.⁵: **G09B 21/00**

(54) **Elektromechanische Braille-Zeile.**

(30) Priorität: **26.02.87 DE 3706286**

(43) Veröffentlichungstag der Anmeldung:
**14.09.88 Patentblatt 88/37**

(45) Bekanntmachung des Hinweises auf die
Patenterteilung:
**30.09.92 Patentblatt 92/40**

(84) Benannte Vertragsstaaten:
**DE FR GB NL**

(56) Entgegenhaltungen:
**EP-A- 0 225 395         CH-A- 599 648
DE-A- 2 510 052         FR-A- 2 233 640
FR-A- 2 463 466         US-A- 3 987 438
US-A- 4 283 178**

(73) Patentinhaber: **Papenmeier, Friedrich Horst
Ob der Kluse 6
W-5840 Schwerte 1(DE)**

(72) Erfinder: **Papenmeier, Friedrich Horst
Ob der Kluse 6
W-5840 Schwerte 1(DE)**

(74) Vertreter: **Schwabe - Sandmair - Marx
Stuntzstrasse 16
W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektromechanische Braille-Zeile zur Darstellung taktiler Informationen für Blinde der im Oberbegriff des Anspruchs 1 angegebenen Gattung.

Solche elektromechanischen Braille-Zeilen, die in blindenspezifische Geräte, bspw. Textverarbeitungsgeräte, aber auch Personal Computer eingebaut werden können, sind in der Regel modular aufgebaut, d.h. sie bestehen aus einzelnen, aneinanderreihbaren 6- oder 8-Punkt-Braillemodulen, von denen jeder Modul wiederum ein einziges Braille-Zeichen darstellt. Jeder einzelne Braille-Modul kann dabei aus je einem rahmenförmigen Modulkörper bestehen, der aus einem thermoplastischen Material hergestellt ist. An seiner Oberfläche ist jeder Modulkörper ganz oder teilweise als taktile Lesefläche - kurz Lesefläche genannt - ausgebildet. Im Bereich jeder Lesefläche sind in dem Modulkörper Löcher in der klassischen Braillepunkt-Anordnung angebracht, die zur Aufnahme der taktilen Lesestifte - kurz Lesestifte genannt - dienen, die von unten einzeln in die Löcher des Modulkörpers eingesetzt werden können.

Weiterhin sind auch piezoelektrische Braille-Zeilen bekannt, bei denen die Lesestifte einzeln von oben in die Löcher des Modulkörpers eingesetzt werden können; die Lesestifte werden dann durch aufklemmbare Modul-Lochkappen, deren Oberseite als Lesefläche ausgebildet ist, in den Löchern gehalten (Braille-Zeile der Fa. KGS Tokyo/JAPAN).

Allen bekannten piezoelektrischen Braille-Zeilen ist gemeinsam, daß der direkte oder indirekte Einzelantrieb der Lesestifte durch das freie Ende von streifenförmigen, piezoelektrischen Biegelementen - auch Aktivatoren genannt - erfolgt, die einseitig fest im Modulkörper eingespannt und entweder parallel oder senkrecht zur Lesefläche angeordnet sind; diese Aktivatoren werden in der Regel durch eine umpolbare elektrische Gleichspannung betrieben, wodurch sie sich senkrecht zu ihrer Fläche nach beiden Richtungen durchbiegen können.

Bei dem piezoelektrischen 8-Punkt-Braillemodul der Fa. KGS Tokyo/Japan sind die etwa 90 mm langen und 3 mm breiten, parallel zur Lesefläche verlaufenden acht Aktivatoren in zwei nebeneinanderliegenden, vierstufigen Stapeln mit je vier Aktivatoren angeordnet, auf deren freien Enden die Lesestifte in vier, den Stufen angepaßten Längen aufstehen und direkt angetrieben werden.

Bei der piezoelektrischen 6-Punkt-Braille-Zeile nach der US-A-4 283 178 sind die ca. 50 mm langen und ca. 6 mm breiten, parallel zur Lesefläche verlaufenden sechs Aktivatoren in drei übereinanderliegenden Stufen mit je zwei Aktivatoren in einem Stapel angeordnet. Damit auch bei dieser räumlichen Anordnung alle Lesestifte von den freien Enden der Aktivatoren direkt angetrieben werden können, ist in jeder Stufe eine Ecke des jeweils oberen Aktivators ausgeklinkt.

Bei diesen piezoelektrischen Braille-Zeilen befinden sich die Lesestifte solange in ihrer Ruhelage, bis ihre Betriebsspannung angelegt wird; in der Regel ragen aber auch in der Ruhelage schon die oberen Enden der Lesestifte etwas aus der Lesefläche heraus. Erst beim Anlegen der entsprechenden Betriebsspannung über eine Ansteuerelektronik werden die Lesestifte in die beiden Arbeitslagen gebracht, nämlich die Lage "Lesestifte oben" ("gesetzt") und "Lesestifte unten" ("nicht gesetzt"). Diese Ansteuerelektronik ist jeweils an der Einspannseite der Aktivatoren am Modulkörper befestigt und so ausgebildet, daß sie horizontal in eine entsprechende Steckvorrichtung eingeschoben werden kann.

Die Aktivatoren werden in ihre untere Lage "nicht gesetzt" durch die Ansteuerelektronik gebracht; in der Regel folgen die Lesestifte dieser Bewegung der Aktivatoren unter dem Einfluß der Schwerkraft, d.h. sie fallen frei nach unten, bis sie die untere Arbeitslage "nicht gesetzt" erreichen.

Aus der EP-A-181 905, siehe insbesondere Figur 4, ist aber auch ein piezoelektrischer Braillemodul bekannt, bei dem die Lesestifte unter der Einwirkung von Zwangskräften den parallel zur Lesefläche angeordneten Aktivatoren folgen. Dabei sind die mit je einem Zapfenlager versehenen Lesestifte und die freien Enden der Aktivatoren mit S-förmigen Bewegungsübertragungsteilen durch Verzapfung verbunden.

Neben den piezoelektrischen Braille-Modulen mit parallel zur Lesefläche verlaufenden Aktivatoren sind auch Ausführungsformen mit senkrecht zur Lesefläche angeordneten Aktivatoren bekannt, die aus einem oder zwei parallel wirkenden, einseitig im Modulkörper eingespannten, streifenförmigen piezoelektrischen Biegelementen bestehen. Der Antrieb der Lesestifte erfolgt hierbei indirekt durch Bewegungsumlenk-Elemente, die zwischen den freien Enden der Aktivatoren und den Fußenden der Lesestifte eingeschaltet sind. Die Aktivatoren empfangen die erforderliche Versorgungsspannung über elektrische Anschlüsse an der Einspannseite der Aktivatoren im Fuß des Modulkörpers, siehe FR-A-77 24 320, FR-A-79 20 300 und EP-A-181 905.

Aus der EU-OS 181 905 ist es außerdem noch bekannt, bei einem Braille-Modul den Modulkörper an den beiden Schmalseiten zwischen zwei parallel zu den Aktivatoren verlaufenden Leiterplatten anzuordnen.

Die piezoelektrischen Braille-Module mit senkrecht zur Lesefläche angeordneten Aktivatoren haben in der Praxis jedoch keine nennenswerte Bedeutung erlangt.

Elektromechanische Braille-Zeilen, die in der Praxis laufend im Einsatz sind, unterliegen durch ihren ständigen direkten Kontakt mit den "Lesefingern" des Blinden und der Umwelt einer mehr oder weniger starken Verschmutzung, insbesondere an den Lesestiften, so daß es zu Funktionsstörungen und damit schließlich zu fehlerhafter Wiedergabe der eingegebenen Braille-Zeichen kommt. Um dies zu vermeiden, empfehlen einige Hersteller von solchen Braille-Zeilen die Verwendung von Zeilenabdeckungen aus extrem dünnen und hochgleitfähigen Textil- oder Folienstreifen, die in Magnetgummirahmen gehalten auf die Braille-Zeilen gelegt werden und auf den Einbaugehäusen haften. Dadurch ergeben sich jedoch zusätzliche Kosten, verbunden mit einer umständlichen Handhabung und geringen Lesesicherheit.

Außerdem bedingen die langen und breiten Aktivatoren sowie der Anbau der Ansteuerelektronik eine relativ lange und hohe Bauform, so daß die bekannten Braille-Module bzw. Braille-Zeilen nur zum Einbau in relativ große Gerätegehäuse geeignet sind, während der Einbau in Taschengeräte praktisch ausgeschlossen ist; außerdem sind die Braille-Module für diese Zwecke zu schwer und zu teuer.

Ein weiteres Problem liegt darin, daß die bekannten Braille-Module in aller Regel nur für das horizontale, nicht jedoch für das vertikale Aufpressen auf, Stecken oder Einlöten in eine Leiterplatte geeignet ist. Hierdurch ergeben sich ebenfalls Handhabungsprobleme.

Weiterhin ist die taktile Seite der herkömmlichen Braille-Module ergonomisch nicht optimal gestaltet; denn alle auf dem Markt erhältlichen Braille-Zeilen können nur mit gestrecktem Finger taktil gelesen werden, so daß es zu Anspannungen bzw. Verkrampfungen in der Hand kommt, mit der die Stifte abgetastet werden. Außerdem können die Abstände zwischen den Lesestiften und damit zwischen den Braille-Punkten nicht an die unterschiedlichen Größen und Empfindlichkeiten der Fingerkuppen des Blinden angepaßt werden. Die Positionen der Lesestifte lassen sich nicht auf Richtigkeit kontrollieren, was insbesondere beim Arbeiten mit Zahlen von großem Nachteil ist.

Der Ausbau der Lesestifte, wie er bspw. zur Reinigung, aber auch für Reparatur- und Wartungsarbeiten erforderlich ist, und der anschließende Wiedereinbau sind relativ umständlich und deshalb zeitraubend und damit unnötig teuer.

Elektromechanische, insbesondere piezoelektrische Braille-Module bzw. Braille-Zeilen mit senkrecht zur Lesefläche angeordneten Aktivatoren haben einen gravierenden Nachteil, der ihre Markteinführung bisher verhindert hat, nämlich ihre relativ große Höhe, so daß sie nur in große Gerätegehäuse eingebaut werden können; für den Einbau in Taschengeräte sind sie nicht geeignet.

Der Erfindung liegt deshalb die Aufgabe zugrunde, eine elektromechanische Braille-Zeile zur Darstellung taktiler Informationen für Blinde der angegebenen Gattung zu schaffen, bei der die oben erwähnten Nachteile nicht auftreten.

Insbesondere soll eine Braille-Zeile vorgeschlagen werden, die nur sehr wenig Raum einnimmt, also insbesondere für Taschengeräte geeignet ist und sich trotzdem problemlos warten und reinigen läßt.

Diese Aufgabe wird erfindungsgemäß durch die im kennzeichnenden Teil des Anspruchs 1 angegebenen Merkmale gelöst.

Zweckmäßige Ausführungsformen werden durch die Merkmale der Unteransprüche definiert.

Die mit der Erfindung erzielten Vorteile beruhen insbesondere auf der räumlichen Aufteilung eines Braille-Moduls in den taktilen bzw. Lesestift-Teil einerseits und den elektromechanischen, insbesondere piezoelektrischen Aktivatoren-Teil andererreits. Dadurch kann der Lesestift-Teil, der besonders empfindlich ist und leicht verschmutzen kann, problemlos abgenommen und gereinigt werden, ohne daß dabei eine Gefahr für die elektromechanischen Aktivatoren besteht. Außerdem können mit einem Satz von Aktivatoren mehrere, gegebenenfalls sogar unterschiedliche Lesestifte-Teile betrieben werden, so daß auch bei Reinigungsarbeiten am Lesestift-Teil die Braille-Zeile durch Einbau eines entsprechenden Reserve-Lesestift-Teils zur Verfügung steht.

Weiterhin ermöglicht der getrennte, austauschbare Lesestift-Teil die einfache Anpassung an neue Gegebenheiten und auch eine schnelle, gründliche Reinigung, bspw. in einem Ultraschall-Bad, wie es für den elektromechanischen Teil in aller Regel nicht eingesetzt werden kann.

Der elektromechanische, bspw. piezoelektische Aktivatoren-Teil ist so ausgebildet, daß er vertikal in eine Leiterplatte eingesteckt bzw. eingelötet oder auf eine Leiterplatte aufgepreßt werden kann; dadurch können die elektronischen Bauelemente auf der Leiterplatte in unmittelbarer Nähe des Modulgehäuses angeordnet werden.

Im Vergleich mit den herkömmlichen Ausführungsformen lassen sich die Einbaumaße, das Gewicht und damit auch der Herstellungspreis einer solchen Braille-Zeile wesentlich verringern; außerdem wird nun der Einbau in Taschengeräte möglich, wodurch ein weiterer Markt erschlossen wird.

Die ergonomische Optimierung der Braille-Zeile bis hin zur Vereinfachung des Einbaus in das Gerätegehäuse ermöglicht der sehr inhomogenen Gruppe von Personen, die für die Benutzung eines solchen Gerätes in Frage kommen, eine wesentliche bessere Orientierung auf der Braille-Zeile sowie eine schnellere und gleichzeitig auch sichere taktile Erkennung der Braille-Zeichen bei entspannter Körperhaltung. Es ist insbesondere möglich, auch mit gekrümmten Fingern zu arbeiten, so daß die oben erwähnten Krämpfe in der Hand vermieden werden können.

Und schließlich lassen sich noch die Arbeits-Lagen der Lesestifte auf Richtigkeit überprüfen, was vor allem beim Umgang mit Zahlen sehr hilfreich ist.

Die Erfindung wird im folgenden anhand von Ausführungsbeispielen unter Bezugnahme auf die beiliegenden, schematischen Zeichnungen näher erläutert. Es zeigen.

Fig. 1     die Vorderansicht einer Ausführungsform einer piezoelektrischen, teilmodular aufgebauten 8-Punkt-Braille-Zeile,

Fig. 2     eine Teil-Seitenansicht dieser 8-Punkt-Braille-Zeile, von links gesehen,

Fig. 3     eine Teil-Draufsicht auf diese Braille-Zeile, und

Fig. 4     eine Darstellung des Grundprinzips eines extrem kurzen Aktivators.

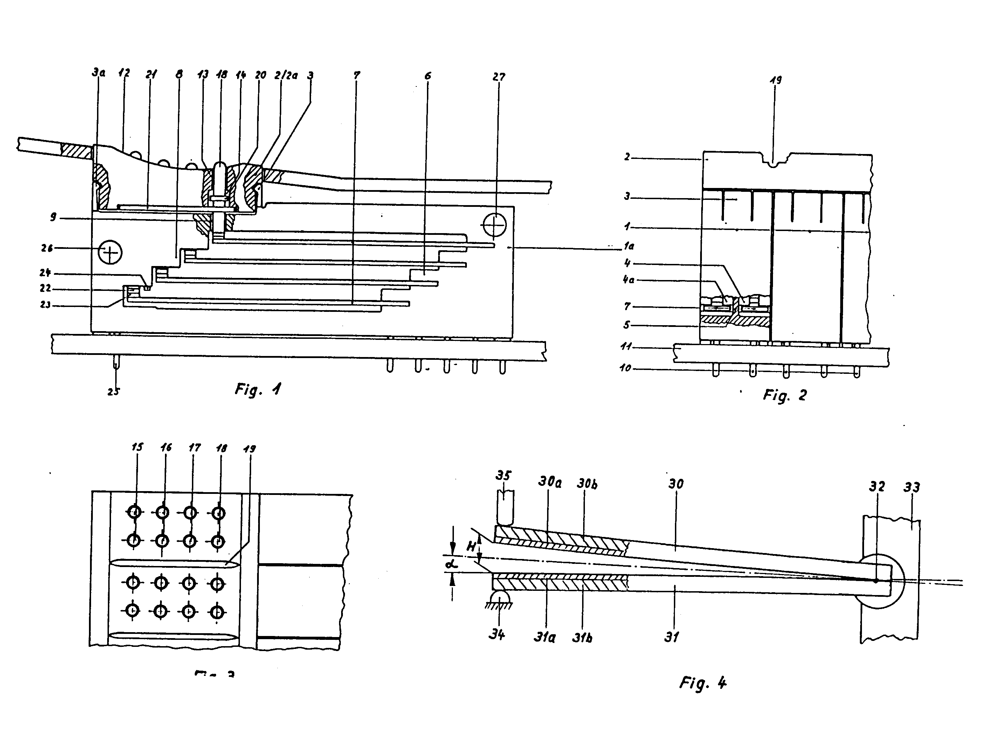

Die aus den Figuren ersichtliche Braille-Zeile besteht aus mehreren, aneinanderreihbaren Braille-Modulen 1, die bei der dargestellten Ausführungsform jeweils acht Punkte darstellen können und damit acht Lesestifte pro Modul (siehe Figur 3) enthalten; jeder Braille-Modul 1 weist einen Modulkörper 1a sowie eine ergonomisch gestaltbare, austauschbare Lesestift-Einheit 2 mit einem Leseflächen-Profil 2a (siehe Figur 1) auf; eine solche Lesestift-Einheit 2 kann auch bei elektromechanischen Braille-Zeilen mit elektromagnetischem Antrieb, also nicht mit piezoelektrischem Antrieb, wie er hier beschrieben wird, eingesetzt werden.

Die Lesestift-Einheit 2 wird auf dem zugehörigen Braille-Modul 1 durch Schnäpper 3, 3a gehalten, die gleichzeitig auch Paßfunktion erfüllen, also eine genau definierte Position vorgeben, auf die die Lesestift-Einheit 2 aufgesetzt wird.

Die Modulkörper 1a der einzelnen Braille-Module 1 sind aus einem thermoplastischen Werkstoff hergestellt und weisen zwei Kammern 4, 4a auf, die durch eine Mittelwand 5 voneinander getrennt sind (siehe Figur 2). in den beiden Kammern 4, 4a befindet sich jeweils an der rechten Schmalseite eine vierstufige Positiv-Terrasse 6, in der vier Aktivatoren 7 für die zugehörigen Lesestifte fest eingespannt sind. An der linken Schmalseite der Kammern 4, 4a befindet sich jeweils eine Negativ-Terrasse 8 mit Löchern 13 für die Lesestifte, wie man aus Figur 1 erkennt; die Aktivatoren 7 sind also horizontal angeordnet, während die Lesestifte in den Löchern 13 vertikal angeordnet sind, mit ihren unteren Enden auf den freien Enden der Aktivatoren 7 aufstehen und mit ihren oberen Enden etwas über die Oberfläche des Leseflächen-Profils 2a hinaus vorstehen, wie man aus Figur 1 erkennt.

Der gemäß der Darstellung in Figur 1 rechte Lesestift 18 wird durch den oberen Aktivator 7 betätigt, während die etwas versetzt zueinander darunter angeordneten, unteren Aktivatoren 7 die jeweils benachbarten Lesestifte 17, 16, 15 von recht nach links beaufschlagen.

An die Löcher 13 in der Lesestift-Einheit 2 schließen sich Löcher 9 im Modulkörper 1a an, wie man in Figur 1 erkennt.

Die Spannungszufuhr zu den einzelnen Aktivatoren 7 erfolgt über an der Unterseite der Modulkörper 1a angeordnete Kontaktstifte 10 und Zuleitungen, die in kleinen, in die Modulkörper 1 eingespritzten Kanälen (nicht dargestellt) liegen.

Die Braille-Module 1 mit ihren Kontaktstiften 10 werden horizontal in eine gemeinsame Leiterplatte 11 eingesteckt oder fest eingelötet; auf der Unterseite dieser Leiterplatte 11 ist die Ansteuerelektronik (nicht dargestellt) angeordnet.

Die Lesestift-Einheit 2 weist das bereits erwähnte Leseflächen-Profil 2a (siehe Figur 1) auf, das an der Oberseite der eigentlichen Lesefläche 12 die Kontur einer Fingerkuppe hat. Im Bereich der Lesefläche 12 sind für jeden Braille-Module 1 acht Lesestift-Löcher 13 in das Leseflächen-Profil 2a eingelassen; jedes Lesestift-Loch 13 mündet in eine Kammer 14 im unteren Teil des Leseflächen-Profils 2a ein.

Jeder Braille-Modul 1 weist vier Gruppen von Lesestiften 15, 16, 17 und 18 unterschiedlicher Länge auf, die so in den Lesestift-Löchern 9, 13 gelagert sind, daß sie in vertikaler Richtung nach oben und nach unten verschoben werden können; die unteren Enden der Lesestifte 15, 16, 17 und 18 stehen auf den freien Enden der zugehörigen Aktivatoren 7 auf (siehe Figur 1).

Im Bereich jeder Kammer 14 haben die Lesestifte 15 - 18 einen als Hubbegrenzung dienenen Bund 20, der in Verbindung mit einer an der Unterseite des Leseflächen-Profils 2a eingesetzten Lochplatte 21 gewährleistet, daß die Lesestifte 15 - 18 abgenommenem Lesestift-Teil nicht nach oben und nach unten aus den Löchern 13 herausrutschen können.

An den Fußenden der Lesestifte 15 - 18 sind kleine Haftmagnete 22 angebracht, also kleine Platten aus permanentmagnetischen Material, während auf den freien Enden der Aktivatoren 7 kleine Plättchen 23 auf ferromagnetischen Material befestigt sind; diese "Schnittstelle" zwischen den Lesestiften 15 - 18 andererseits und den freien Enden der zugehörigen Aktivatoren 7 andererseits bewirkt, daß bei Beaufschlagung eines bestimmten Aktivators 7 durch ein Ansteuersignal der zugehörige Lesestift 15 - 18 durch die magnetische Anziehungskraft nach unten in die untere Arbeitslage oder aber durch Verformung des angesteuerten Aktivators 7 nach oben in die obere Arbeitslage bewegt wird.

Die obere Arbeitslage der Lesestift-Gruppe (siehe Figur 3), in die die Lesestifte 15 - 18 durch piezoelektrische Verformung der Aktivatoren gebracht werden, wird von den zugehörigen Aktivatoren 7 durch ein Gleichstom-Signal an Endlagen-Kontakte 24 gemeldet, die mit Kontaktstiften 25 elektrisch leitend verbunden sind (nicht dargestellt).

Wie man aus Figur 2 erkennt, erstreckt sich die Lesestift-Einheit 2 über mehrere Braille-Module 1 hinweg; über den Stoßkanten benachbarter Braille-Module 1 ist in der Lesefläche jeweils eine taktil erfaßbare Marke in Form einer kleinen Rille 19 vorgesehen, so daß der Blinde die Grenzen zwischen den benachbarten Braille-Zeichen 1 erfassen kann.

Die aus Figur 1 ersichtlichen Löcher 26 und 27 in den Braille-Modulen 1 diennen als Montagehilfen.

Die hier dargestellten Aktivatoren 7 haben bei einer realisierten Ausführungsform eine Länge von weniger als 45 mm bei einer Breite von max. 3 mm. Noch kürzere Aktivatoren 7, die ebenfalls speziell für Taschengeräte geeignet sind, lassen sich vorzugsweise mit wenigstens zwei in Reihe wirkenden piezoelektrischen Biegelementen realisieren; eine entsprechende Ausführungsform ist in Figur 4 dargestellt.

Dabei bestehen die beiden Biegelemente 30, 31 aus zwei dünnen Metallträgern 30a, 31a, die im Bereich 32 fest miteinander verbunden und in einem Isolierlager 33 gehalten sind. Auf der Außenseite sind die beiden Metallträger 30a, 31a mit je einer dünnen Schicht 30b, 31b aus einem piezokeramischen Werkstoff belegt.

Bei Anlegen einer Betriebs-Gleichspannung von bspw. 150 V will sich das Biegelement 31 nach unten durchbiegen, was jedoch durch einen Anschlag 34 verhindert wird, so daß in der isolierten Lagerstelle 32, 33 der beiden Biegeelemente 31 eine Drehung dieser Elemente 30, 31 um einen Winkel $\alpha$ erfolgt, um den das nach oben durchgebogenen Biegeelemente 30 zusätzlich angehoben wird.

Der in Figur 4 dargestellt Hub H, um den das obere Biegeelement 30 und damit auch der auf seinem freien Ende aufliegende Lesestift 35 angehoben wird, setzt sich also aus den Teilhüben der freien Enden der Biegeelemente 30, 31 zusammen.

Die in Figur 4 dargestellte Ausführungsform kann in soweit abgewandelt werden, als auf das Isolierlager 33 verzichtet und die Aktivatorhalterung bei der Abstützung 34 durchgeführt wird.

Bei der dargestellten Ausführungsform haben die Braille-Punkte der auswechselbaren Lesestifte-Einheit jedes Braille-Moduls 1, aber auch der benachbarten Braille-Module 1 gleiche Abstände; als Alternative hierzu ist es auch möglich, die Abstände der Braille-Punkte für jeden Modulkörper 1a gleich zu halten, jedoch diese Abstände für die verschiedenen Lesestift-Einheiten 2 variabel zu gestalten.

Wie aus Figur 1 ersichtlich, ist die Lesefläche 2a der Lesestift-Einheit 2 so ausgebildet, daß die Lesefläche 12 nach hinten, also zu der von der Bedienungsperson abgewandten Seite hin, abfällt. Diese Neigung läßt sich auch durch entsprechende Ausgestaltung der Geräteplatte 2b oder des Modulkörpers 1a des Braille-Moduls 1 erreichen.

Bei der Ausführungsform nach Figur 1 ist das Profil 2a der Lesefläche 12 der Kontur einer Fingerkuppe angepaßt; in gleicher Weise können auch die taktilen Höhen der Lesestifte 15 - 18 an die Kontur einer Fingerkuppe angepaßt werden.

**Patentansprüche**

1. Elektromechanische, modular aufgebaute Braille-Zeile zur Darstellung taktiler Informationen für Blinde

   a) mit wenigstens einem Braille-Modul (1) mit einem Modulkörper (1a), der an seiner Oberseite wenigstens teilweise als taktile Lesefläche (12) ausgebildet ist,

   b) mit etwa lotrechten Löchern (13) in der klassischen Braille-Punkt-Anordnung in der Lesefläche (12) und dem Modulkörper (1a) zur beweglichen Aufnahme von taktilen Lesestiften (15-18),

   c) mit elektromechanischen, einseitig fest im Modulkörper (1a) eingespannten Aktivatoren (7), deren bewegliche freie Enden je einen taktilen Lesestift (15-18) in die obere Arbeitslage "gesetzt" oder in die untere Arbeitslage "nicht gesetzt" bringen, und

   d) mit einer Aktivator-Ansteuerelektronik für jeden Braille-Modul (1),

   **gekennzeichnet durch** die folgenden Merkmale:

   e) die taktilen Lesestifte (15-18) sind unverlierbar in einer von dem Modulkörper (1a) abnehmbaren Lochleiste angeordnet und bilden mit der Lochleiste eine auswechselbare Lesestift-Einheit (2);

   f) die Oberseite der Lochleiste ist als taktile Lesefläche (12) ausgebildet; und

   g) die elektrischen Verbindungselemente (10) sind an der Unterseite des Modulkörpers sowie an der Einspannseite der Aktivatoren (7) vorgesehen.

2. Elektromechanische, modular aufgebaute Braille-Zeile zur Darstellung taktiler Informationen für Blinde

   a) mit wenigstens einem Braille-Modul (1) mit einem Modulkörper (1a), der an seiner Oberseite wenigstens teilweise als taktile Lesefläche (12) ausgebildet ist,

   b) mit etwa lotrechten Löchern (13) in der klassischen Braille-Punkt-Anordnung in der Lesefläche (12) und dem Modulkörper (1a) zur beweglichen Aufnahme von taktilen Lesestiften (15-18),

   c) mit elektromechanischen, einseitig fest im Modulkörper (1a) eingespannten Aktivatoren (7), deren bewegliche freie Enden je einen taktilen Lesestift (15-18) in die obere Arbeitslage "gesetzt" oder in die untere Arbeitslage "nicht gesetzt" bringen, und

   d) mit einer Aktivator-Ansteuerelektronik für jeden Braille-Modul (1),

   **gekennzeichnet durch** die folgenden Merkmale:

   e) die taktilen Lesestifte (16-18) sind unverlierbar in einer von dem Modulkörper (1a) abnehmbaren Lochleiste angeordnet und bilden mit der Lochleiste eine auswechselbare Lesestift-Einheit (2);

   f) die Oberseite der Lochleiste ist als taktile Lesefläche (12) ausgebildet; und

   g) jeder Braille-Modul (1) weist nur an seiner Unterseite elektrische Verbindungselemente (10) zum vertikalen Aufpressen auf, Einstecken oder Einlöten in eine für mehrere Braille-Module (1) vorgesehene Leiterplatte (11) auf.

3. Elektromechanische Braille-Zeile nach einem der Ansprüche 1 oder 2, dadurch gekennzeichnet, daß die taktile Lesefläche (12), die Aktivatoren (7) und die Unterseite der Modulkörper (1a) parallel zueinander verlaufen.

4. Elektromechanische Braille-Zeile nach einem der Ansprüche 1 bis 3, dadurch gekennzeichnet, daß für jeden Modulkörper (1a) die Braille-Punkt-Abstände gleich sind, während die Braille-Punkt-Abstände der auswechselbaren Lesestift-Einheiten (2) unterschiedlich sind.

5. Elektromechanische Braille-Zeile nach einem der Ansprüche 1 bis 4, dadurch gekennzeichnet, daß die Braille-Module (1) und/oder die Lesestift-Einheiten (2) und/oder die Geräteplatte so ausgebildet sind, daß die taktile Lesefläche (12) zu dem von der Bedienungsperson aus gesehen hinteren Ende hin etwas abfällt.

6. Elektromechanische Braille-Zeile nach einem der Ansprüche 1 bis 5, dadurch gekennzeichnet, daß das Profil (2a) der Lesefläche (12) der auswechselbaren Lesestift-Einheit (2) so ausgebildet ist, daß die Lesefläche (12) die Kontur einer Fingerkuppe hat.

7. Elektromechanische Braille-Zeile nach Anspruch 6, dadurch gekennzeichnet, daß die taktilen Höhen der Lesestifte (15 - 18) der Kontur einer Fingerkuppe angepaßt sind.

8. Elektromechanische Braille-Zeile nach einem der Ansprüche 1 bis 7, dadurch gekennzeichnet, daß die taktile Lesefläche (12) auf der Grenze zwischen zwei benachbarten Braille-Modulen (1) mit taktil erkennbaren Trennmarkierungen (19) versehen ist.

9. Elektromechanische Braille-Zeile nach Anspruch 8, dadurch gekennzeichnet, daß die taktil erkennbaren Trennmarkierungen als Rille (19) oder Erhöhung ausgebildet sind.

10. Elektromechanische Braille-Zeile nach einem der Ansprüche 1 bis 9, dadurch gekennzeichnet, daß die taktilen Lesestifte (15 - 18) im spannungslosen Zustand zumindest teilweise aus den Löchern (13) der Lesestift-Einheit (2) in Löcher (9) des Modulkörpers ragen.

11. Elektromechanische Braille-Zeile nach einem der Ansprüche 1 bis 10, dadurch gekennzeichnet, daß die taktilen Lesestifte (15 - 18) durch Zwangskräfte in die untere Arbeits-Lage "nicht gesetzt" bringbar sind.

12. Elektromechanische Braille-Zeile nach Anspruch 11, dadurch gekennzeichnet, daß die beweglichen, freien Enden der Atkivatoren (7) mit Haft- oder Klemmelementen (22) versehen sind, die mit den unteren Enden der Lesestifte (15 - 18) zusammenwirken.

13. Elektromechanische Braille-Zeile nach Anspruch 12, dadurch gekennzeichnet, daß an den Fußenden der Lesestifte (15 - 18) Haftmagnete (22) angebracht sind, die mit Plättchen (23) aus ferromagnetischem Material an den freien Enden der Aktivatoren (7) zusammenwirken.

14. Elektromechanische Braille-Zeile nach einem der Ansprüche 1 bis 13, gekennzeichnet durch eine Positions-Kontrollschaltung zur Überwachung wenigstens einer der beiden Arbeitslagen der taktilen Lesestifte (15 - 18) der Braille-Module (1).

15. Elektromechanische Braille-Zeile nach Anspruch 14, ddurch gekennzeichnet, daß jeder Aktivator (7) in seiner Endlage über einen Endlagenkontakt (24) ein entsprechendes Positionssignal auslöst und damit die entsprechende Arbeitslage des Lesestiftes (15 - 18) anzeigt.

16. Elektromechanische Braille-Zeile nach einem der Ansprüche 1 bis 15, dadurch gekennzeichnet, daß die Aktivatoren als streifenförmige, piezoelektrische Kurzaktivatoren (7) ausgebildet sind, deren Gesamtlänge maximal 40 mm beträgt.

17. Elektromechanische Braille-Zeile nach Anspruch 16, dadurch gekennzeichnet, daß die Kurzaktivatoren (7) eine maximale Breite von 3 mm haben.

18. Elektromechanische Braille-Zeile nach einem der Ansprüche 16 und 17, dadurch gekennzeichnet, daß die Kurzaktivatoren (7) aus zwei, sich nur nach außen durchbiegenden Biegeelementen (30, 31) bestehen, die so im dem Modulkörper (1a) angeordnet sind, daß sich bei Anliegen einer Betriebsspannung die beiden Teilhübe ihrer freien Enden zu einem Gesamthub (H) addieren.

19. Elektromechanische Braille-Zeile nach einem der Ansprüche 1 bis 18, dadurch gekennzeichnet, daß der Modulkörper (1a) und die Lesestift-Einheit (2) durch Schnäpper (3, 3a), die auch Paßfunktion erfüllen, miteinander verbunden sind.

20. Elektromechanische Braille-Zeile nach einem der Ansprüche 1 bis 19, dadurch gekennzeichnet, daß die Lesestift-Einheit (12) mit den unverlierbaren taktilen Lesestiften (15-18) nach oben von dem Modulkörper (1) abhebbar sind.

**Claims**

1. An electromechanical Braille cell of modular construction for the notation of tactile data for blind persons, comprising
    a) at least one Braille module (1) with a module body (1a), the upper face of which is constructed at least partially as a tactile reading surface (12),
    b) substantially vertical perforations (13) in the conventional Braille dot arrangement in the reading surface (12) and the module body (1a) for the movable accommodation of tactile reading pins (15 to 18),
    c) electromechanical activators (7) which are at one end rigidly clamped in the module body (1a) and of which the movable free ends respectively move a tactile reading pin (15 to 18) into the "composed" upper working position or into the "not composed" lower working position, and
    d) an electronic activator control arrangement for each Braille module (1),
    characterised by the following features:
    e) the tactile reading pins (15 to 18) are disposed captive in a perforated strip which is removable from the module body (1a) and together with the perforated strip they constitute an interchangeable reading pin unit (2);
    f) the upper surface of the perforated strip is constructed as a tactile reading surface (12), and
    g) the electrical connecting elements (10) are provided on the under side of the module body and at the clamped end of the activators (7).

2. An electromechanical Braille cell of modular construction for the notation of tactile data for blind persons, comprising
    a) at least one Braille module (1) with a module body (1a), the upper face of which is constructed at least partially as a tactile reading surface (12),
    b) substantially vertical perforations (13) in the conventional Braille dot arrangement in the reading surface (12) and the module body (1a) for the movable accommodation of tactile reading pins (15 to 18),
    c) electromechanical activators (7) which are at one end rigidly clamped in the module body (1a) and of which the movable free ends respectively move a tactile reading pin (15 to 18) into the "composed" upper working position or into the "not composed" lower working position, and
    d) an electronic activator control arrangement for each Braille module (1),
    characterised by the following features:
    e) the tactile reading pins (16 to 18) are disposed captive in a perforated strip which is removable from the module body (1a) and together with the perforated strip they constitute an interchangeable reading pin unit (2);
    f) the upper surface of the perforated strip is constructed as a tactile reading surface (12), and
    g) each Braille module (1) has only on its under side electrical connecting elements (10) by which it can be pressed onto, fitted on or soldered into a circuit board (11) adapted to receive a plurality of Braille modules (1).

3. An electromechanical Braille cell according to one of claims 1 or 2, characterised in that the tactile reading surface (12), the activators (7) and the under side of the module bodies (1a) extend parallel with one another.

4. An electromechanical Braille cell according to one of claims 1 to 3, characterised in that for each module body (1a) the gaps between Braille dots are identical while the distances between the Braille dots on the interchangeable reading pin units (2) are different.

5. An electromechanical Braille cell according to one of claims 1 to 4, characterised in that the Braille modules (1) and/or the reading pin units (2) and/or the appliance board are so constructed that the tactile reading surface (12) falls away somewhat towards the rear end, as viewed by the operator.

6. An electromechanical Braille cell according to one of claims 1 to 5, characterised in that the profile (2a) of the reading surface (12) of the interchangeable reading pin unit (2) is so constructed that the reading surface (12) has the contours of a finger tip.

7. An electromechanical Braille cell according to claim 6, characterised in that the tactile tops of the reading pins (15 to 18) are adapted to the contours of a finger tip.

8. An electromechanical Braille cell according to one of claims 1 to 7, characterised in that the tactile reading surface (12) at the boundary between two adjacent Braille modules (1) is provided with dividing markings (19) which can be recognised by touch.

9. An electromechanical Braille cell according to claim 8, characterised in that the separating markings which can be recognised by touch are constructed as grooves (19) or projections.

10. An electromechanical Braille cell according to one of claims 1 to 9, characterised in that, in the dead condition, the tactile reading pins (15 to 18) project at least partially from the holes (13) in the reading pin unit (2) and into holes (9) in the module body.

11. An electromechanical Braille cell according to one of claims 1 to 10, characterised in that the tactile reading pins (15 to 18) can be moved by positive forces into the lower "not composed" working position.

12. An electromechanical Braille cell according to claim 11, characterised in that the movable free ends of the activators (7) are provided with holding or clamping elements (22) which co-operate with the bottom ends of the reading pins (15 to 18).

13. An electromechanical Braille cell according to claim 12, characterised in that there are at the bottom ends of the reading pins (15 to 18) holding magnets (22) which co-operate with small plates (23) of ferromagnetic material on the free ends of the activators (7).

14. An electromechanical Braille cell according to one of claims 1 to 13, characterised by a position monitoring circuit for monitoring at least one the two working positions of the tactile reading pins (15 to 18) of the Braille module (1).

15. An electromechanical Braille cell according to claim 14, characterised in that in its extreme position each activator (7) triggers a corresponding position signal via an extreme position contact (24) and thus indicating the corresponding working position of the reading pins (15 to 18).

16. An electromechanical Braille cell according to one of claims 1 to 15, characterised in that the activators are constructed as strip-like piezoelectric short activators (7), the total length of which amounts to a maximum of 40 mm.

17. An electromechanical Braille cell according to claim 16, characterised in that the short activators (7) have a maximum width of 3 mm.

18. An electromechanical Braille cell according to one of claims 16 and 17, characterised in that the short activators (7) consist of two, only outwardly flexing bending elements (30, 31) which are so disposed in the module body (1a) such that when an operating voltage is applied the two partial strokes of their free ends add together to form a total stroke (H).

19. An electromechanical Braille cell according to one of claims 1 to 18, characterised in that the module body (1a) and the reading pin unit (2) are connected to each other by snap fasteners (3, 3a) which also fulfil a fitting function.

20. An electromechanical Braille cell according to one of claims 1 to 19, characterised in that the reading pin unit (2) with the captive tactile reading pins (15 to 18) can be moved upwardly and lifted off the module body (1).

**Revendications**

1. Cellule Braille modulaire, électromécanique, en vue de la représentation d'informations tactiles pour aveugles

   a) équipée d'au moins un module Braille (1) avec un corps de module (1a), qui est réalisé sur son côté supérieur,au moins partiellement, sous la forme d'une surface de lecture tactile (12),

   b) équipée de trous sensiblement verticaux (13) selon la disposition ponctuelle Braille classique dans la surface de lecture (12) et le corps de module (1a) en vue de la réception mobile de tiges de lecture tactiles (15-18),

   c) équipée d'activateurs (7) électromécaniques, encastrés d'une part dans le corps de module (1a), dont les extrémités libres amènent chaque tige de lecture tactile (15-18) dans la position de travail supérieure "saillante" ou dans la position de travail inférieure "non saillante", et

   d) équipée d'une électronique de commande d'activateur pour chaque module Braille (1),

   caractérisée en ce que :

   e) les tiges de lecture tactiles (15-18) sont disposées non perdables dans une barrette à trous amovible du corps de module (1a) et forment avec la barrette à trous une unité de tiges de lecture interchangeable (2) ;

   f) le côté supérieur de la barrette à trous est réalisé sous la forme d'une surface de lecture tactile (12) ; et

   g) les éléments de liaison électriques (10) sont prévus sur le côté inférieur du corps de module ainsi que sur le côté d'encastrement des activateurs (7).

2. Cellule Braille modulaire électromécanique, en vue de la représentation d'informations tactiles pour aveugles

   a) équipée d'au moins d'un module Braille (1) comportant un corps de module (1a), qui est réalisé sur son côté supérieur, au moins partiellement, sous la forme d'une surface de lecture tactile (12),

   b) avec des trous sensiblement verticaux (13) selon la disposition ponctuelle Braille classique dans la surface de lecture (12) et le corps de module (1a) en vue de la réception mobile de tiges de lecture tactiles (15-18),

   c) avec des activateurs (7) électromécaniques, encastrés d'un côté dans le corps de module (1a), dont les extrémités libres amènent chaque tige de lecture tactile (15-18) dans la position de travail supérieure "saillante" ou dans la position de travail inférieure "non saillante", et

   d) avec une électronique de commande d'activateur pour chaque module Braille (1),

   caractérisée en ce que :

   e) les tiges de lecture tactiles sont disposées de façon imperdable dans une barrette (15-18) à trous amovible du corps de module (1a) et forment avec la barrette à trous une unité de tiges de lecture interchangeable (2) ;

   f) le côté supérieur de la barrette à trous est réalisé sous la forme d'une surface de lecture tactile (12) ; et

   g) chaque module Braille (1) présente uniquement sur son côté inférieur des éléments de liaison électriques (10) en vue du contact, l'enfichage ou le soudage dans une carte de circuits imprimés (11) prévuepour plusieurs modules Braille (1).

3. Cellule Braille électromécanique selon l'une des revendications 1 ou 2, caractérisée en ce que les surfaces de lecture tactiles (12) s'étendent parallèlement aux activateurs (7) et au côté inférieur des corps de module (1a).

4. Cellule Braille électromécanique selon l'une des revendications 1 à 3, caractérisée en ce que pour chaque corps de module (1a) les espacements ponctuels Braille sont identiques, tandis que les espacements ponctuels Braille des unités de tiges de lecture interchangeables (2) sont différents.

5. Cellule Braille électromécanique selon l'une des revendications 1 à 4, caractérisée en ce que le module Braille (1) et/ou les unités de tiges de lecture (2) et/ou les plaques de dispositif sont réalisées de sorte que la surface de lecture tactile (12) s'écarte quelque peu de l'extrémité postérieure vue de l'utilisateur.

6. Cellule Braille électromécanique selon l'une quelconque des revendications 1 à 5, caractérisée en ce que le profil (2a) de la surface de lecture (12) de l'unité de tiges de lecture interchangeable (2) est réalisé de sorte que la surface de lecture (12) présente le contour d'une extrémité de doigt.

7. Cellule Braille électromécanique selon la revendication 6, caractérisée en ce que les hauteurs tactiles des tiges de lecture (15-18) sont adaptées au contour d'une extrémité de doigt.

**8.** Cellule araille électromécanique selon l'une quelconque des revendications 1 à 7, caractérisée en ce que la surface de lecture tactile (12) est munie à la limite entre deux modules Braille adjacents (1) de repères de séparation (19) reconnaissables tactilement.

**9.** Cellule Braille électromécanique selon la revendication 8, caractérisée en ce que les repères de séparation reconnaissables tactilement sont réalisés sous la forme d'une gorge (19) ou d'une surélévation.

**10.** Cellule Braille électromécanique selon l'une quelconque des revendications 1 à 9, caractérisée en ce que les tiges de lecture tactiles (15-18) en l'absence de tension font saillie au moins partiellement des trous (13) de l'unité de tiges de lecture (2) dans des trous (9) du corps de module.

**11.** Cellule Braille électromécanique selon l'une quelconque des revendications 1 à 10, caractérisée en ce que les tiges de lecture tactiles (15-18) peuvent être amenées dans la position de travail inférieure "non saillante" par des forces de compression.

**12.** Cellule Braille électromécanique selon la revendication 11, caractérisée en ce que les extrémités libres mobiles des activateurs (7) sont munies d'éléments adhésifs ou de pincements (22), qui coopèrent avec les extrémités inférieures des tiges de lecture (15-18).

**13.** Cellule Braille électromécanique selon la revendication 12, caractérisée en ce qu'aux extrémités inférieures des tiges de lecture (15-18) sont disposés des aimants (22), qui coopèrent avec des plaquettes (23) en matériau ferromagnétique sur les extrémités libres des activateurs (7).

**14.** Cellule Braille électromécanique selon l'une quelconque des revendications 1 à 13, caractérisée par un circuit de commande de position en vue de la surveillance d'au moins l'une des deux positions de travail des tiges de lecture tactiles (15-18) du module Braille (1).

**15.** Cellule Braille électromécanique selon la revendication 14, caractérisée en ce que chaque activateur (7) dans sa position terminale sur un contact de position terminale (24) déclenche un signal de position correspondant et ainsi indique la position de travail correspondante de la tige de lecture (15-18).

**16.** Cellule Braille électromécanique selon l'une quelconque des revendications 1 à 15, caractérisée en ce que les activateurs sont réalisés sous la forme d'activateurs courts (7) piézoélectriques, sous forme de bandes, dont la longueur totale s'élève au maximum à 40 mm.

**17.** Cellule Braille électromécanique selon la revendication 16, caractérisée en ce que les activateurs courts (7) possèdent une largeur maximale de 3 mm.

**18.** Cellule Braille électromécanique selon l'une quelconque des revendications 16 et 17, caractérisée en ce que les activateurs courts (7) se composent de deux éléments de flexion (30, 31) se courbant uniquement vers l'extérieur, qui sont disposés dans le corps de module (1a), de sorte que, lors de l'application d'une tension de service, les deux courses partielles de leurs extrémités libres s'additionnent en une course totale (H).

**19.** Cellule Braille électromécanique selon l'une quelconque des revendications 1 à 18, caractérisée en ce que le corps de module (1a) et l'unité de tiges de lecture (2) sont réunies l'un à l'autre par des accouplements à déclic (3, 3a), qui remplissent également une fonction d'ajustage.

**20.** Cellule Braille électromécanique selon l'une quelconque des revendications 1 à 19, caractérisée en ce que l'unité de tiges de lecture (12) avec les tiges de lecture tactiles imperdables (15-18) peut être extraite vers le haut du corps de module (1).

Fig. 1

Fig. 2

Fig. 3

Fig. 4

EP 0 281 746 B1